# EUROPEAN PATENT SPECIFICATION

(11) **EP 1 412 212 B1**
(45) Date of publication and mention of the grant of the patent: **17.05.2006**
(21) Application number: 02753082.3
(22) Date of filing: 15.07.2002
(51) Int. Cl.: B60J 5/04

(54) **DOOR MODULE**
TÜRMODUL
MODULE POUR PORTIERE

(30) Priority: 27.07.2001 US 917192
(43) Date of publication of application: 28.04.2004
(73) Proprietor: Brose Fahrzeugteile GmbH & Co. KG, Coburg, 96450 Coburg (DE)
(72) Inventor: DAWSON, Timothy, Wixom, MI 48393 (US)
(74) Representative: Baumgärtel, Gunnar
(86) International application number: PCT/EP2002/007864
(87) International publication number: WO 2003/011622

(56) References cited:
- WO-A-00/20186
- DE-A- 19 944 965
- US-A- 4 781 956
- PATENT ABSTRACTS OF JAPAN vol. 2000, no. 16, 8 May 2001 (2001-05-08) & JP 2001 018654 A (YAZAKI CORP), 23 January 2001 (2001-01-23)

## Description

### Field of the Invention

The invention relates to a door module, a compression moulding set for manufacturing a door module, and a process of manufacturing a door module.

### Background of the Invention.

Door modules are commonly used to cover large cut-out recesses in the inside door panel of a vehicle door. The door module covers such recess in a sealed manner so that a door body is divided into a wet cell lying between a door outside panel, and a dry cell lying between the door module and an adjoining door inside trim. Electrical and electronic components can be prefitted on the door module. Their electrical plug connectors are located solely on the dry cell side.

Known door modules usually consist of a steel carrier to which a separate foam seal is applied in order to provide a sealed coverage of a cut-out recess in an inside door panel. However, several manufacturing steps are usually required to fix the separate foam seal on the steal carrier. The manufacturing process thereby becomes lengthy and costly.

Also known are door modules having injection moulded carriers with integrated seals and other intergrated features, as shown in DE 199 44 965 A1. However, the integration of seals and other features is limited as is the elasticity of the integrated features due to the structural requirements for the carrier. Moreover, the door modules are produced from a short glass fiber plastic compound; short glass fiber material, however, is expensive.

It is thus desirable to address these disadvantages.

### Summary of the Invention

According to one aspect of the invention, there is provided a door module for covering a surface cut-out recess in the inside panel of a vehicle door, the door module comprising a substantially rigid structural portion of long glass fiber reinforced plastic, and a substantially elastic functional portion of plastic substantially free of long glass fibers and formed integrally with the structural portion. Accordingly, there is provided a door module which achieves integration of rigid structural features (i.e. the carrier) and elastic functional features. Through employing long glass fiber reinforced plastic, the cost of the door module is reduced.

The functional portion may comprise a first lip seal extending along the outer rim area of the door module, for sealing a connection between the door module and the inside panel of the vehicle door. A second lip seal extending parallel to the first lip seal may be provided for extra sealing.

In one embodiment of the invention, the vehicle door body is divided into a wet cell lying between a door outside panel and the door module, and a dry cell lying between the door module and an adjoining door inside trim, and the functional portion comprises a drip ledge extending into the wet cell along a lower area of the door module when installed in the vehicle door, for repelling water from a connection between the door module an the inside panel of the vehicle door.

In another embodiment of the invention, the vehicle door body is also divided into a wet cell lying between a door outside panel and the door module, and a dry cell lying between the door module and an adjoining door inside trim, and the functional portion comprises one or more clips extending in the dry cell, for attachment of a wire harness, electrical connectors and suchlike. In addition, the functional portion may comprise attachment elements for attaching the door inside trim, electrical and/or electronic elements to the door module within the dry cell. Furthermore, the functional portion may comprise attachment means for attaching noise reduction elements to the door module within the dry cell and/or the wet cell. Accordingly, a high degree of flexibility is achieved in terms of providing integrated functional features as required for any given type of door and special equipment associated with the vehicle door.

In one embodiment of the invention, the functional portion comprises a lip for contacting a door window when retracted into the wet cell of the vehicle door, thereby to reduce movements of the door window perpendicular to the window plane. Thereby, an "anti-rattle" device is provided.

Preferably, the long glass fibers of the long glass fiber enforced plastic material are staple glass fibers, i.e. long glass fibers of limited length. Preferably, the long glass fibers have a length of approximately 20 mm, and a thickness of approximately 0.02 mm. The glass fiber portion of the long glass fiber enforced plastic material may be between 30 and 70%, and preferably around 40%. The plastic material may be polypropylene.

According to another aspect of the invention, there is provided a mould for manufacturing a door module for a vehicle door by compression moulding, the mould being arranged to receive a long glass fiber enriched plastic material, and for shaping a structural portion of the door module during compression moulding, and comprising one or more cavities of such dimensions that during compression moulding, plastic material substantially free of long glass fibers is forced into at least part of the one or more cavities, thereby to shape a functional portion of the door module. Such extraction of plastic from the long glass fiber enriched plastic material in the cavities has been established in experiments to be controllable through the specification of dimensions of the cavities. Accordingly, a mould is provided which allows the provision of rigid structural features and integrated elastic functional features in one manufacturing step. Thereby, the manufacture of door modules is simplified considerably.

Preferably, the mould also comprises a heater for heating the long glass fiber enriched plastic material received in the mould. Thereby, the formability of the long glass fiber enriched plastic material received in the mould is enhanced.

In one embodiment of the invention, the functional structure comprises one or more elastic functional elements such as a lip seal, and the cavity has the inverse shape of the one or more elastic functional elements to be formed during compression moulding. Thus, by providing suitable cavities, elastic functional elements of any desired shape (and thus function) may be formed.

According to another aspect of the invention, there is provided a process of manufacturing a door module for a vehicle door, the process comprising: providing a mould for shaping a structural portion of the door module, the mould comprising one or more cavities; filling the mould with a long glass fiber enriched plastic material; exerting pressure on the long glass fiber enriched plastic material received in the mould, wherein said one or more cavities in the mould are of such dimensions that plastic material substantially free of long glass fibers is forced into at least part of the one or more cavities; and hardening of the structural and functional portions. Accordingly, a simplified manufacturing process is provided which allows the production of door modules having both rigid structural features as well as integrated elastic functional features. A complicated addition of separate functional features after provision of a carrier is no longer necessary.

Preferably, the long glass fiber enriched plastic material received in the mould is heated before exerting pressure, in order to improve its compressability.

The process may further comprise the step of trimming the functional structure so as to obtain one or more wiring harness clips or any other functional feature required. Through trimming, it is thus possible to realise more sophisticated shapes than by specifying the inverse shape of the required feature in the form of the cavity.

In one embodiment of the invention, the cavity has the inverse shape of a lip extending along the outer rim area of the door module, wherein the lip is bent relative to the surface of the structural portion so that a cross section of the lip is at an angle to the surface of the structural portion. Alternatively, this can be achieved by trimming the functional structure so as to obtain a lip whose cross section lip is at an angle to the surface of the structural portion.

### Brief Description of the Drawings

Exemplary embodiments of the invention will now be described by reference to the accompanying drawings, of which: .
Figure 1 illustrates schematically a vehicle door, in accordance wuth an embodiment of the invention;
Figure 2 illustrates a cross-sectional view along line A-A in Figure 1;
Figures 3 illustrates the cross section along line A-A in Figure 1 of an alternative embodiment before assembly;
Figure 4 illustrates the cross section along line A-A in Figure 1 of an alternative embodiment of the invention after assembly;
Figure 5 illustrates a cross-sectional view of part of a door module in accordance with another embodiment of the invention;
Figure 6 illustrates schematically the steps of a process of compression moulding a door module in accordance with an embodiment of the invention;
Figure 7 illustrates a moulding set for compression moulding a door module in a process according to Figure 6;
Figure 8 illustrates a stamp forming part of the moulding set of Figure 7;
Figure 9 illustrates a door module in accordance with an embodiment of the invention before trim;
Figure 10 illustrates the door module of Figure 9 after trim;
Figure 11 illustrates a door module in accordance with another embodiment of the invention before trim; and
Figure 12 illustrates the door module of Figure 11 after trim.

### Detailed Description of the Drawings

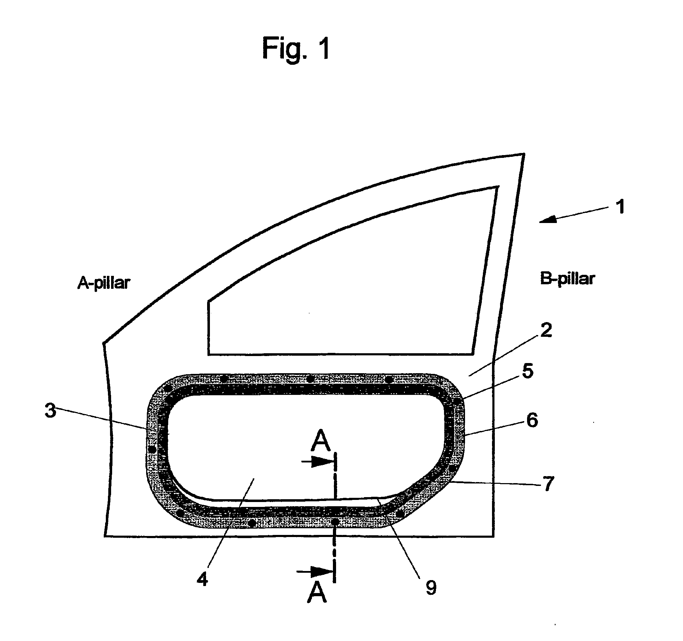

Figure 1 shows schematically a vehicle door 1 as seen from the outside of a vehicle. For the sake of illustration, the door outside panel of the vehide door 1 is not shown so that a door inside panel 2 can be seen. The door inside panel 2 is provided with a large surface cut-out recess 3. The recess 3 is covered from the inside by a door module 4 in a sealed manner so that the door body is divided into a wet cell lying inbetween the door outside panel and the door module 4, and a dry cell lying between the door module 4 and an adjoining door inside trim (not shown). The dry cell provides a space for containing electrical and/or electronic components such an electric motor for driving a window lifter, a control unit for the electric motor, a wiring harness, etc. These components are attached to the door module 4 by clips and other attachment elements, as will be illustrated hereinbelow. Likewise, the door inside trim is attached to the door module by means of clips or otherwise. Since the equipment of a vehicle depends on its specifcation, the number of components in the dry cell can vary considerably, and as a consequence, so does the requirement for suitable attachment means therefor.

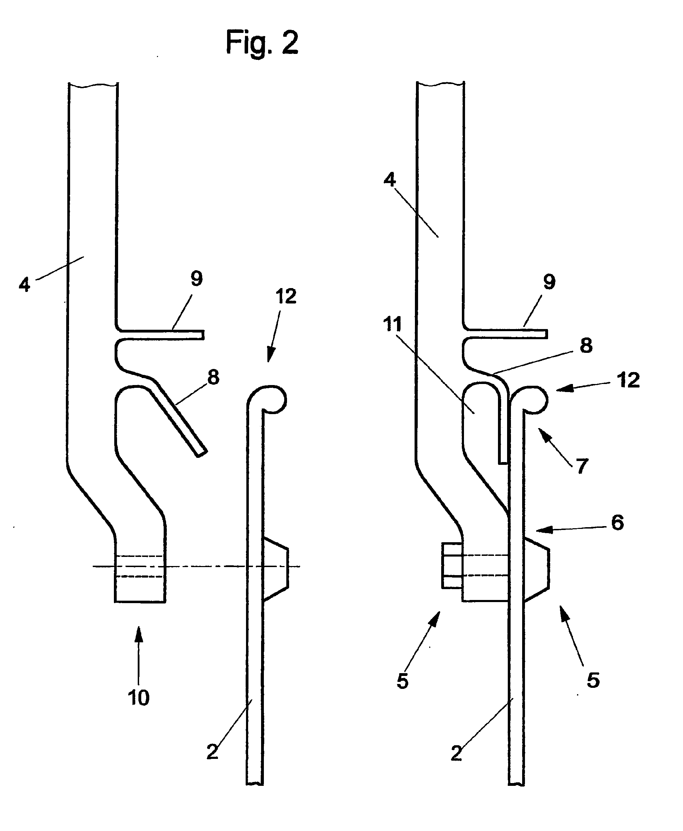

The door module 3 is attached to the door inside panel 2 through attachment means 5. As illustrated in Figure 1 by a first grey zone 6, a contact seal zone is formed around the recess 3 where the door inside panel 2 and the door module 4 are in contact, as is also illustrated in Figure 2. In addition, a lip seal zone 7 is formed by a lip 8 (Figure 2) surrounding the recess 3 and arranged on the door module 4 so as to extend inbetween the door module 4 and the inside door panel 2 (as will also be explained with reference to Figure 2). Furthermore, a drip ledge 9 is provided at the door module 4 in order to provide a drip seal zone. The drip ledge 8 is provided just above the lower contact area of the door module 4 and the inside door panel 2 in order to prevent water from dripping thereon.

Figure 2 illustrates a cross-sectional view along line A-A in Figure 1. On the left and on the right, the door module 4 and the inside door panel 2 are shown before and after assembly, respectively. In the orientation of Figure 2, the dry cell mentioned in connection of Figure 1 would be on the left of the door module 4, wheras the wet cell would on the right.

The lip 8 forming the lip seal zone 7 is bent towards the adjacent free end portion 10 of the door module 4: The free end portion 10 is offset laterally relative to the remainder of the door module 4. Thus, when the free end 10 of the door module 4 is fixed to the inside door panel 2, a gap 11 is formed inbetween the door module 4 and the inside door panel 2. The lip 8 is arranged at the door module 4 such as to extend into the gap 11. Since the gap 11 is smaller than the length by which the lip 8 projects perpendicularly from the door module 4, the lip 8 is always in contact with the inside door panel 2 when the door module 4 is attached thereto, thereby forming the lip seal zone 7.

The drip ledge 9 is formed by a lip which is substantially at a right angle to the door module 4 and which is arranged inside the recess 3 adjacent to the lower part of the rim 12 of the inside door panel 2 defining the recess 3. The drip ledge 9 has a perpendicular extension from the door module which is larger than the the gap 11. Thus, in the orientation of Figure 2, water entering the wet cell from above is prevented from dripping onto the area where the free ends of the door module 4 and the inside door panel 2 adjoin.

Figure 2 also illustrates the contact seal zone 6 which is formed where the free end 10 of the door module 4 is held in contact with the inside door panel 2 through the attachment means 5 (in the form of a screw connection in Figure 2).

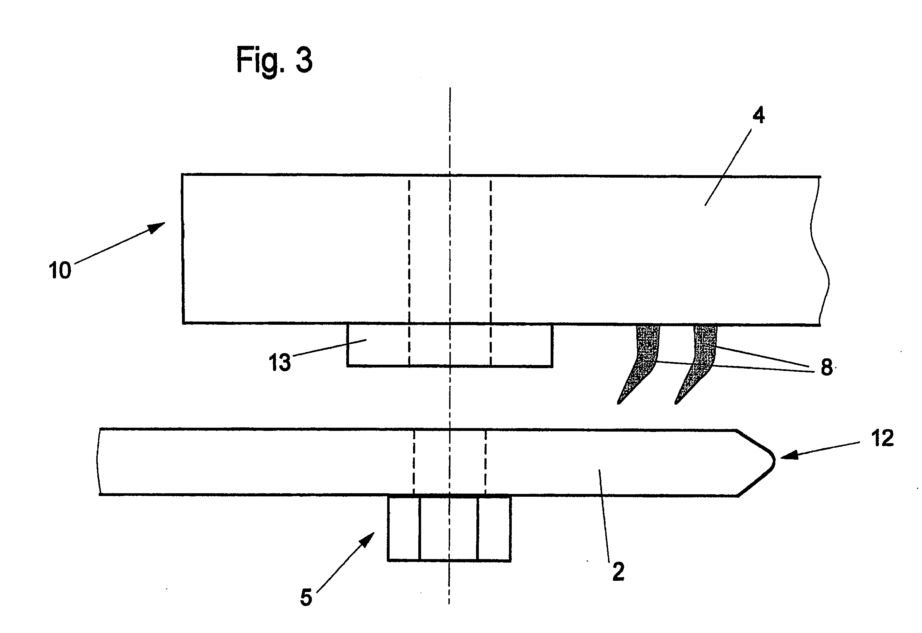

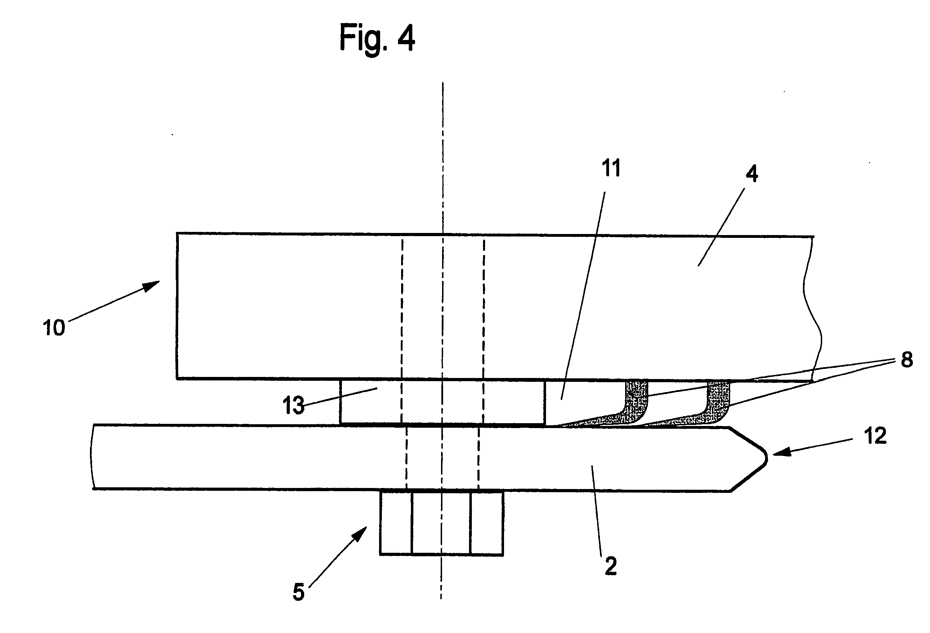

Figures 3 and 4 illustrate the cross section along line A-A in Figure 1 of an alternative embodiment before and after assembly, respectively. In this embodiment, two lips 8 are arranged adjacent to one another. The lips 8 extend in parallel to each other around the rim 12 of the inside door panel 2, in order to provide the lip seal zone 6. In contrast to the first embodiment, the gap 11 of this embodiment is provided by means of a flange 13 inbetween the door module 4 and the inside door panel 2, instead of a lateral offset of the end portion 10. As in the first embodiment, the gap 11 is smaller than the length by which the lips 8 project from the door module 4 so that they contact the inside door panel 2 when assembled. Also, the lips 8 are bent towards the end portion 10 so that their free ends point in that direction, before as well as after assembly.

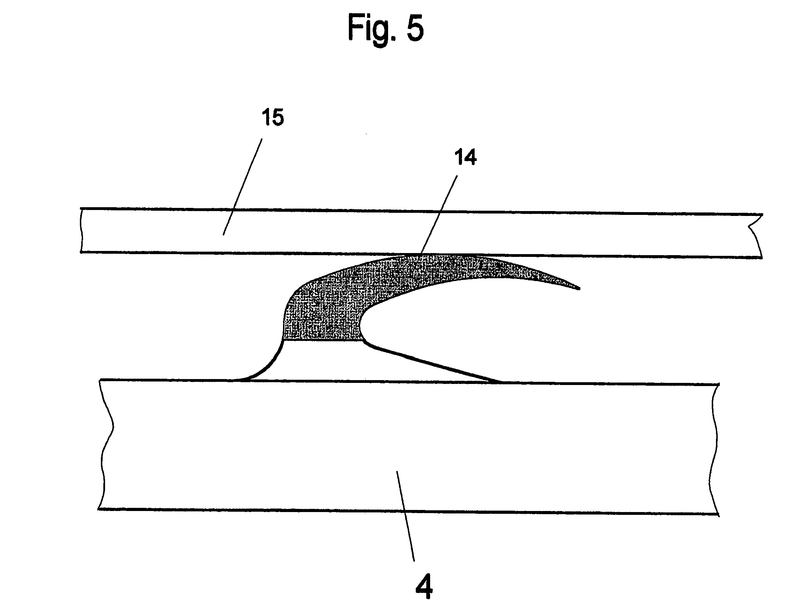

Figure 5 illustrates a cross-sectional view of yet another embodiment of the invention. In this embodiment , the door module 4 comprises a lip 14 for contacting a door window 15 when retracted (partly or fully) into the vehicle door 1. Thereby, undesired movement of the window 15 perpendicular to the window plane is restricted. As a consequence, rattling of the window 15 when retracted is eliminated or at least reduced. The lip 14 at rest (i.e. with the window unretracted) can extend perpendicuarly from the door module 14 so that it is only bent into the position shown in Figure 5 by retraction of the window 15. Alternatively, the lip 14 can be pre-bent by a suitable angle relative to the surface of the door module 4 so that the lip tip points away from the bottom end of the window 15 when unretracted. In any case, the lip 14 projects from the door module surface far enough to ensure contact with the window 15.

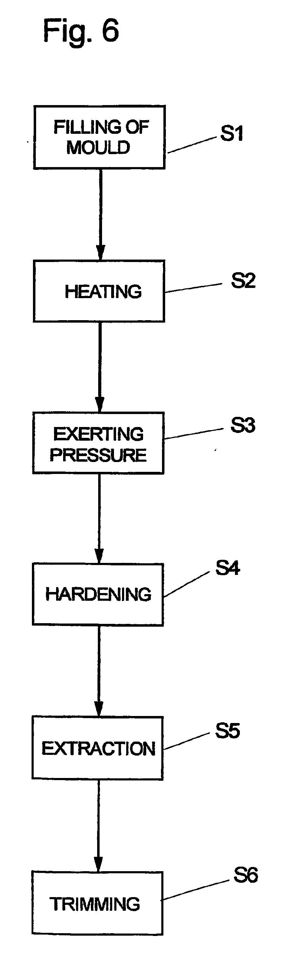

Figure 6 illustrates schematically a compression moulding process of a door module in accordance with an embodiment of the invention. In a first step S1, a mould is filled with a long glass fiber enriched polypropylene. In a second step S2, the long glass fiber enriched polypropylene is heated in order to assist the moulding process. Subsequently, in a step S3, pressure is exerted to the heated (and thus flexible) long glass fiber enriched polypropylene in the mould. In the mould surface, one or more cavities are provided which have the inverse shape of functional features to be formed as part of the door module (as will be explained in more detail hereinbelow), such as for example the lip 8 or the drip ledge 9. During the step of pressure exertion, material is forced into the cavity so as to form the functional features, as is explained in more detail hereinbelow. In further subsequent steps S4 and S5, the moulded material is hardened and extracted from the mould. Then, a trimming step S6 is applied, in which the functional features are cut to a desired shape, if necessary. Alternatively, trimming actions such as bending can be performed before the hardening step is completed, that is when the moulded material is still flexible and can thus still be formed.

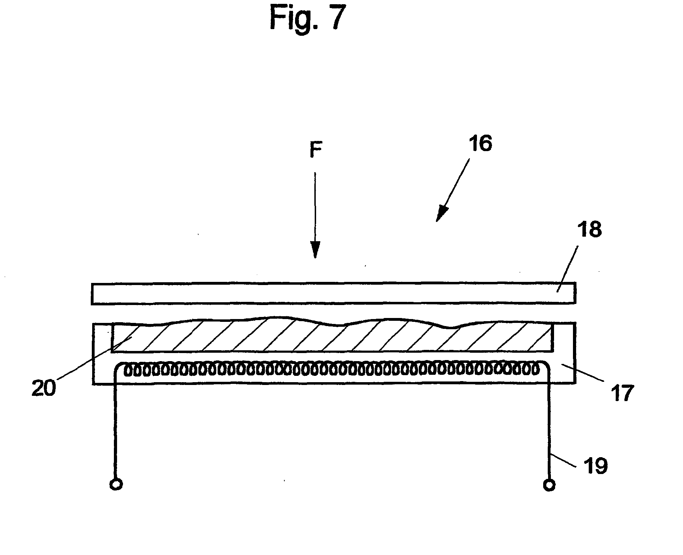

Figure 7 illustrates a mould 16 for compression moulding the door module 4 in a process according to Figure 6. The mould 16 is shown as consisting of a base portion 17 and a separate stamp portion 18 for exerting pressure on material received in the base portion 17. However, this is for illustration purposes only and the mould may as well be formed in a single piece. The base portion17 comprises a heater 19 for heating a material 20 received in the base portion 17 in order to facilitate the moulding process. During the moulding process, pressure is exerted onto the material 20 by applying the stamp portion 18, as schematically indicated by force F. Thereby, the material 20 is moulded in accordance with the shape of the mould 17 and the stamp 18. Subsequently, the material 20 is hardened and extracted from the mould 17.

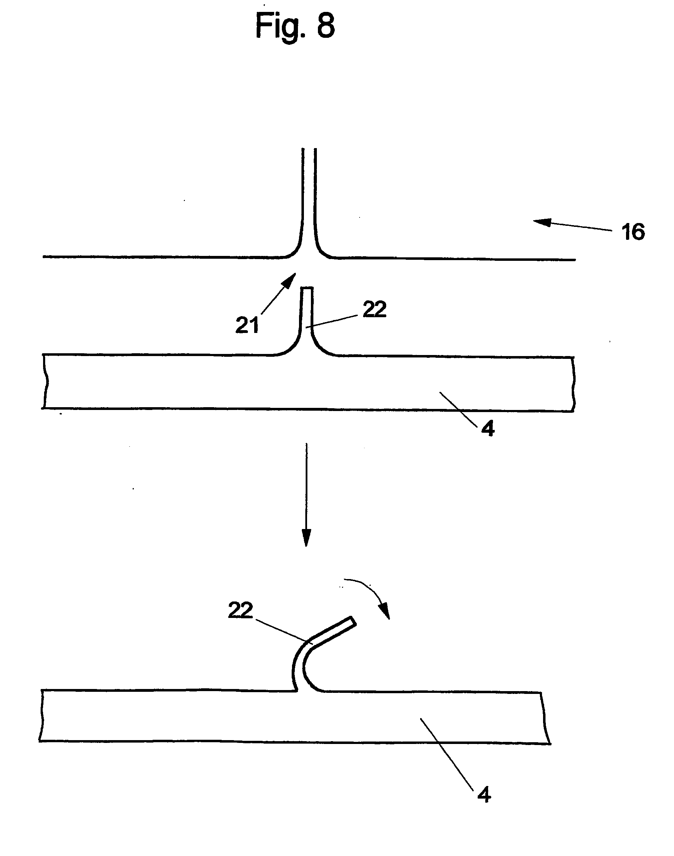

As shown in Figure 8, a cavity 21 is provided in an inner surface of the mould 16. During compression moulding, the material 19 is forced into the cavity 21 and adopts the inverse shape thereof, whereby a lip 22 is formed. In a subsequent step, the lip 22 is bent while the material 19 has not yet completely hardened.

According to an embodiment of the invention, the material 19 consists of long glass fiber enriched polypropylene. The cavity 21 is shaped and dimensioned such that during compression moulding, the long glass fibers are extracted from the polypropylene at the entry of the cavity 21 such that polypropylene which is substantially free of glass fibers enters the cavity 21. As a consequence, the lip 22 consists of a material different from the remainder of the door module 4. That is, the lip 22 consists of polypropylene which is virtually fiberglass-free, whereas the remainder of the door module 4 consists of fiberglass-reinforced polypropylene. As a further consquence, the lip 22 is elastic, while the main body of the door module 4 is rigid. It is thus possible to produce structural rigid features (such as the door module main body) in the same manufacturing step as elastic functional features (such as the lip 22).

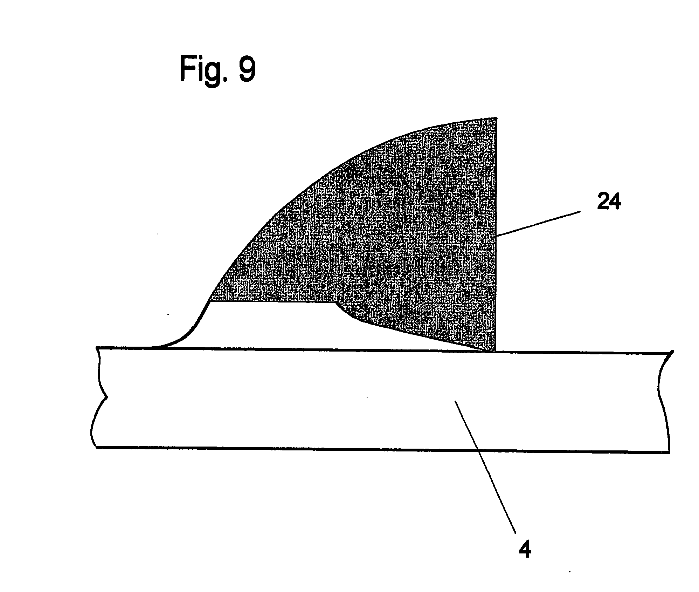

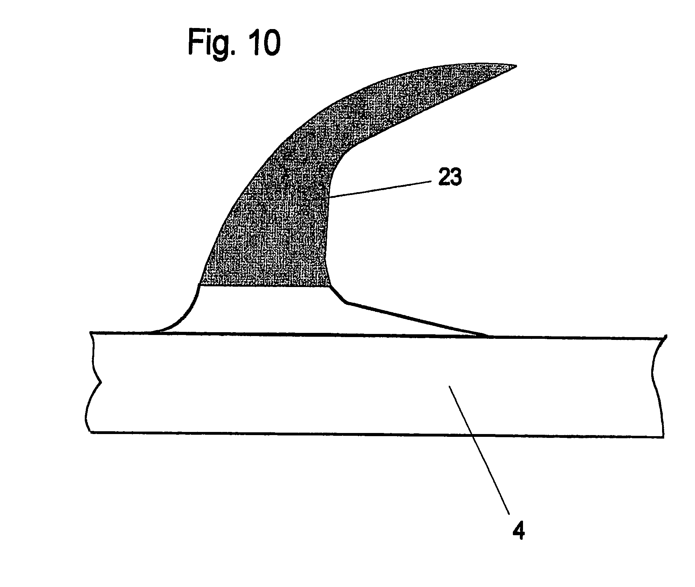

Figures 9 and 10 illustrate an embodiment of the invention, in which a lip 23 is formed during the trimming step S6 of Figure 6 by cutting. Figure 9 shows the door module 4 after compression moulding and after the hardening step. The door module comprises a projection 24 having the cross-sectional shape of a fin. By cutting away some of the projection 24, the lip 23 as depicted in Figure 10 is obtained. The lip 23 of Figure 10 can function as a seal (as explained in connection with Figure 2 in respect of the lip 8) or as an "anti-rattle" device (as explained in connection with the lip 14 of Figure 5).

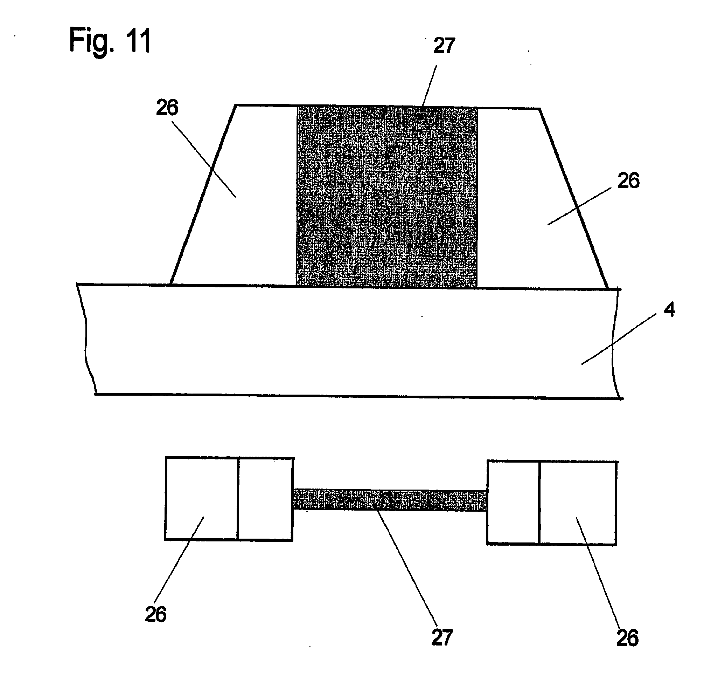

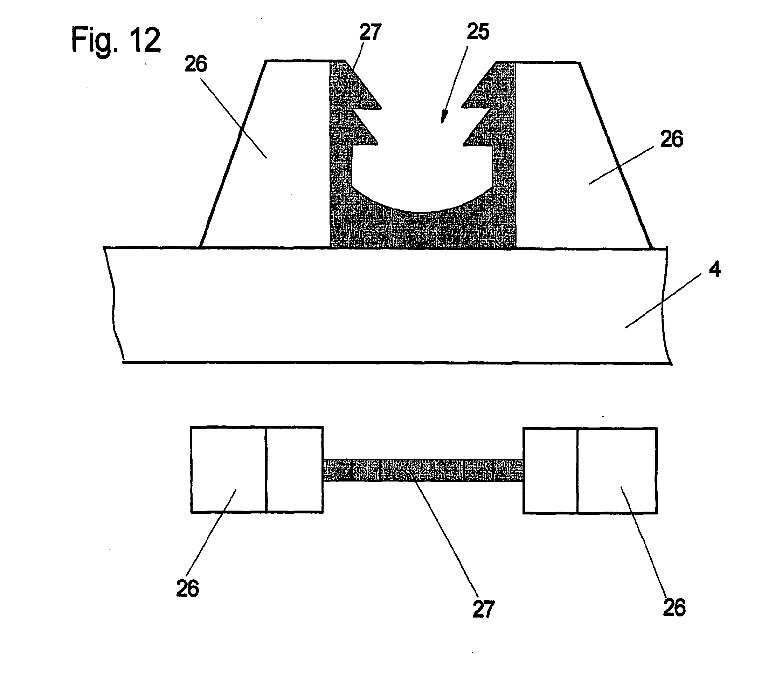

Figures 11 and 12 illustrate the manufacture of a wire harness holder 25, each showing a cross sectional view and a top view of part of the door module 4. Figure 11 shows the door module 4 after the hardening step S4 but before the trimming step S6. The door module 4 comprises two fiberglass-enforced projections 26, inbetween which a polypropylene area substantially free of fiberglass is provided. During the trim operation the polypropylene area is cut so as to obtain the wire harness holder 25 as best seen in the upper illustration of Figure 12. Due to the elasticity of the wire harness holder 25, a wire harness can be easily inserted therein and thereby attached to the door module 4.

It is to be noted that the invention is not limited to the embodiments described above. It is envisaged that various modifications and variations to the above described embodiments can be made without falling outside the scope of the present invention as determined from the claims.

## Claims

1. A door module (4) for covering a surface cut-out recess (3) in the inside panel (2) of a vehicle door, **characterised in that** said door module comprises a substantially rigid structural portion of long glass fiber reinforced plastic, and a substantially elastic functional portion of plastic substantially free of long glass fibers and formed integrally with said structural portion.

2. The door module of claim 1, wherein the functional portion comprises a lip seal extending along the outer rim area of the door module, for sealing a connection between the door module and the inside panel of the vehicle door.

3. The door module of claim 2, wherein the functional portion comprises two lip seals extending in parallel along the outer rim area of the door module, for sealing a connection between the door module and the inside panel of the vehicle door.

4. The door module of claim 1, wherein the vehide door body is divided into a wet cell lying between a door outside panel and the door module, and a dry cell lying between the door module and an adjoining door inside trim, and the functional portion comprises a drip ledge extending into the wet cell along a lower area of the door module when installed in the vehicle door, for repelling water from a connection between the door module an the inside panel of the vehicle door.

5. The door module of claim 1, wherein the vehicle door body is divided into a wet cell lying between a door outside panel and the door module, and a dry cell lying between the door module and an adjoining door inside trim, and the functional portion comprises one or more wiring harness clips extending in the dry cell.

6. The door module of claim 1, wherein the vehicle door body is divided into a wet cell lying between a door outside panel and the door module, and a dry cell lying between the door module and an adjoining door inside trim wherein the vehicle door body is divided into a wet cell lying between a door outside panel and the door module, and a dry cell lying between the door module and an adjoining door inside trim, and the functional portion comprises attachment elements for attaching the door inside trim to the door module.

7. The door module of claim 1, wherein the vehicle door body is divided into a wet cell lying between a door outside panel and the door module, and a dry cell lying between the door module and an adjoining door inside trim, and the functional portion comprises attachment elements for attaching electrical and/or electronic elements to the door module within the dry cell.

8. The door module of claim 1, wherein the vehicle door body is divided into a wet cell lying between a door outside panel and the door module, and a dry cell lying between the door module and an adjoining door inside trim, and the functional portion comprises attachment means for attaching noise reduction elements to the door module within the dry cell and/or the wet cell.

9. The door module of claim 1, wherein the vehicle door body is divided into a wet cell lying between a door outside panel and the door module, and a dry cell lying between the door module and an adjoining door inside trim, and the functional portion comprises a lip for contacting a door window when retracted into the wet cell of the vehicle door, thereby to reduce movements of the door window perpendicular to the window plane.

10. The door module of claim 1, wherein the long glass fibers of the long glass fiber enforced plastic material are staple glass fibers.

11. The door module of claim 1, wherein the glass fiber portion of the long glass fiber enforced plastic material is between 30 and 70%.

12. The door module of claim 11, wherein the glass fiber portion of the long glass fiber enforced plastic material is approximately 40%.

13. The door module of claim 1, wherein the glass fibers of the long glass fiber enforced plastic material have a length of approximately 20 mm, and a thickness of approximately 0.02 mm.

14. The door module of daim 1, wherein the plastic material is polypropylene.

15. A process of manufacturing a door module for a vehicle door, **characterised by** comprising:
providing a mould for shaping a structural portion of the door module, the mould comprising one or more cavities;
filling the mould with a long glass fiber enriched plastic material;
exerting pressure on the long glass fiber enriched plastic material received in the mould, wherein said one or more cavities in the mould are of such dimensions that plastic material substantially free of long glass fibers is forced into at least part of the one or more cavities; and
hardening of the structural and functional portions.

16. The process of claim 15, further comprising:
heating the long glass fiber enriched plastic material received in the mould before exerting pressure.

17. The process of claim 15, further comprising:
trimming the functional structure so as to obtain one or more wiring harness clips.

18. The process of claim 15, wherein the cavity has the inverse shape of a lip extending along the outer rim area of the door module, the process further comprising:
bending the lip relative to the surface of the structural portion so that a cross section of the lip is at an angle to the surface of the structural portion.

19. The process of claim 15, further comprising:
trimming the functional structure so as to obtain a lip whose cross section lip is at an angle to the surface of the structural portion.

## Patentansprüche

1. Türmodul (4) zum Abdecken einer aus der Oberfläche der Innenwand (2) einer Fahrzeugtür ausgeschnittenen Aussparung (3), **dadurch gekennzeichnet, dass** das Türmodul ein im Wesentlichen starren Strukturabschnitt aus mit langen Glasfasern verstärktem Kunststoff umfasst sowie einen im Wesentlichen elastischen Funktionsabschnitt aus Kunststoff, der im Wesentlichen keine langen Glasfasern enthält und der in einem Stück mit dem Strukturabschnitt geformt ist.

2. Türmodul gemäß Anspruch 1, wobei der Funktionsabschnitt eine Lippendichtung enthält, die sich entlang des äußeren Randbereichs des Türmoduls erstreckt, um einen Übergang zwischen dem Türmodul und der Innenwand der Fahrzeugtür abzudichten.

3. Türmodul gemäß Anspruch 2, wobei der Funktionsabschnitt zwei Lippendichtungen enthält, die sich parallel zueinander entlang des äußeren Randbereichs des Türmoduls erstrecken, um einen Übergang zwischen dem Türmodul und der Innenwand der Fahrzeugtür abzudichten.

4. Türmodul gemäß Anspruch 1, wobei der Fahrzeugtürkörper in einen Nassraum, der zwischen einer Türaußenwand und dem Türmodul liegt, und einen Trockenraum, der zwischen dem Türmodul und einer angrenzenden Türinnenverkleidung liegt, unterteilt ist und wobei der Funktionsabschnitt eine Vorsprungsleiste enthält, die sich entlang eines unteren Bereichs des Türmoduls in den Nassraum hinein erstreckt, um Wasser aus einem Übergang zwischen dem Türmodul und der Innenwand der Fahrzeugtür abzuweisen, wenn er in die Fahrzeugtür eingesetzt ist.

5. Türmodul gemäß Anspruch 1, wobei der Fahrzeugtürkörper in einen Nassraum, der zwischen einer Türaußenwand und dem Türmodul liegt, und einen Trockenraum, der zwischen dem Türmodul und einer angrenzenden Türinnenverkleidung liegt, unterteilt ist und wobei der Funktionsabschnitt einen oder mehrere Clips für Kabelbäume umfasst, der oder die sich in den Trockenraum erstrecken.

6. Türmodul gemäß Anspruch 1, wobei der Fahrzeugtürkörper in einen Nassraum, der zwischen einer Türaußenwand und dem Türmodul liegt, und einen Trockenraum, der zwischen dem Türmodul und einer angrenzenden Türinnenverkleidung liegt, unterteilt ist und wobei der Funktionsabschnitt Befestigungselemente zum Befestigen der Türinnenverkleidung am Türmodul umfasst.

7. Türmodul gemäß Anspruch 1, wobei der Fahrzeugtürkörper in einen Nassraum, der zwischen einer Türaußenwand und dem Türmodul liegt, und einen Trockenraum, der zwischen dem Türmodul und einer angrenzenden Türinnenverkleidung liegt, unterteilt ist und wobei der Funktionsabschnitt Befestigungselemente zum Befestigen von elektrischen und/oder elektronischen Elementen am Türmodul innerhalb des Trockenraums umfasst.

8. Türmodul gemäß Anspruch 1, wobei der Fahrzeugtürkörper in einen Nassraum, der zwischen einer Türaußenwand und dem Türmodul liegt, und einen Trockenraum, der zwischen dem Türmodul und einer angrenzenden Türinnenverkleidung liegt, unterteilt ist und wobei der Funktionsabschnitt Befestigungsmittel zur Befestigung von Lärmverminderungselementen am Türmodul innerhalb des Trockenraums und/oder des Nassraums umfasst.

9. Türmodul gemäß Anspruch 1, wobei der Fahrzeugtürkörper in einen Nassraum, der zwischen einer Türaußenwand und dem Türmodul liegt, und einen Trockenraum, der zwischen dem Türmodul und einer angrenzenden Türinnenverkleidung liegt, unterteilt ist und wobei der Funktionsabschnitt eine Lippe zur Kontaktierung eines Türfensters, wenn dieses in den Nassraum der Fahrzeugtür eingezogen wird, umfasst, die **dadurch** Bewegungen des Türfensters senkrecht zur Fensterebene reduziert.

10. Türmodul gemäß Anspruch 1, wobei die langen Glasfasern des mit den langen Glasfasern verstärkten Kunststoffmaterials Stapelglasfasern sind.

11. Türmodul gemäß Anspruch 1, wobei der Glasfaseranteil des mit den langen Glasfasern verstärkten Kunststoffmaterials zwischen 30 und 70 % liegt.

12. Türmodul gemäß Anspruch 11, wobei der Glasfaseranteil des mit den langen Glasfasern verstärkten Kunststoffmaterials ca. 40 % beträgt.

13. Türmodul gemäß Anspruch 1, wobei die Glasfasern des mit den langen Glasfasern verstärkten Kunststoffmaterials eine Länge von ca. 20 mm und eine Dicke von ca. 0,02 mm aufweisen.

14. Türmodul gemäß Anspruch 1, wobei es sich bei dem Kunststoffmaterial um Polypropylen handelt.

15. Ein Verfahren zur Herstellung eines Türmoduls für eine Fahrzeugtür, **gekennzeichnet durch** das Folgende umfassend:
Bereitstellen einer Form zur Formung eines Strukturabschnitts des Türmoduls, wobei die Form einen oder mehrere Hohlräume umfasst;
Füllen der Form mit einem mit langen Glasfasern angereicherten Kunststoffmaterial;
Ausüben von Druck auf das mit den langen Glasfasern angereicherte Kunststoffmaterial, das in der Form aufgenommen wurde, wobei der eine oder die mehreren Hohlräume in der Form solche Dimensionen aufweisen, dass Kunststoffmaterial, welches im Wesentlichen frei von langen Glasfasern ist, zumindest in einen Teil des einen oder der mehreren Hohlräume gepresst wird; und
Härten des Struktur- und des Funktionsabschnitts.

16. Verfahren gemäß Anspruch 15, ferner umfassend:
Erwärmen des mit den langen Glasfasern angereicherten Kunststoffmaterials, das in der Form aufgenommen wurde, bevor ein Druck ausgeübt wird.

17. Verfahren gemäß Anspruch 15, ferner umfassend:
Derartiges Anpassen der Funktionsstruktur, dass ein oder mehrere Clips für Kabelbäume erhalten werden.

18. Verfahren gemäß Anspruch 15, wobei der Hohlraum die invertierte Form einer Lippe aufweist, welche sich entlang des äußeren Randbereichs des Türmoduls erstreckt, und wobei das Verfahren ferner umfasst:
Biegen der Lippe relativ zur Oberfläche des Strukturabschnitts, so dass ein Querschnitt der Lippe einen Winkel zur Oberfläche des Strukturabschnitts aufweist.

19. Verfahren gemäß Anspruch 15, ferner umfassend:
Derartiges Anpassen der Funktionsstruktur, dass eine Lippe, deren Querschnittslippe einen Winkel zur Oberfläche des Strukturabschnitts aufweist, erhalten wird.

## Revendications

1. Module pour portière (4) destiné à l'habillage d'un renfoncement (3) dans le panneau intérieur (2) d'une portière de véhicule, **caractérisé en ce que** le module pour portière comprend une partie structurelle principalement rigide en plastique renforcée de fibres de verre longues, et une partie fonctionnelle principalement élastique en plastique principalement exempt de fibres de verre longues et formée intégralement avec ladite partie structurelle.

2. Module pour portière selon la revendication 1, dans lequel la partie fonctionnelle comprend un joint à lèvre s'étendant le long du bord extérieur du module pour portière, pour étanchéifier la jonction entre le module pour portière et le panneau intérieur de la portière du véhicule.

3. Module pour portière selon la revendication 2, dans lequel la partie fonctionnelle comprend deux joints à lèvre s'étendant en parallèle le long du bord extérieur du module pour portière, pour étanchéifier la jonction entre le module pour portière et le panneau intérieur de la portière du véhicule.

4. Module pour portière selon la revendication 1, dans lequel le corps de la portière du véhicule se divise en une cellule humide située entre un panneau extérieur de portière et le module pour portière et en une cellule sèche située entre le module pour portière et un garnissage intérieur de portière adjacent, et la partie fonctionnelle comprend un rebord d'égouttement s'étendant dans la cellule humide le long d'une zone basse du module pour portière lorsque celui-ci est monté dans la portière du véhicule, ce bord étant destiné à empêcher l'eau d'arriver jusqu'à la jonction entre le module pour portière et le panneau intérieur de la portière du véhicule.

5. Module pour portière selon la revendication 1, dans lequel le corps de la portière du véhicule se divise en une cellule humide située entre un panneau extérieur de portière et le module pour portière et en une cellule sèche située entre le module pour portière et un garnissage de portière intérieur adjacent, et la partie fonctionnelle comprend une ou plusieurs découpe(s) de faisceaux de câbles s'étendant dans la cellule sèche.

6. Module pour portière selon la revendication 1, dans lequel le corps de la portière du véhicule se divise en une cellule humide située entre un panneau extérieur de portière et le module pour portière et en une cellule sèche située entre le module pour portière et un garnissage intérieur de portière adjacent, et la partie fonctionnelle comprend des éléments de fixation permettant de fixer le garnissage intérieur de portière au module pour portière.

7. Module pour portière selon la revendication 1, dans lequel le corps de la portière du véhicule se divise en une cellule humide située entre un panneau extérieur de portière et le module pour portière et en une cellule sèche située entre le module pour portière et un garnissage intérieur de portière adjacent, et la partie fonctionnelle comprend des éléments de fixation permettant de fixer les éléments électriques et/ou électroniques au module pour portière à l'intérieur de la cellule sèche.

8. Module pour portière selon la revendication 1, dans lequel le corps de la portière du véhicule se divise en une cellule humide située entre un panneau extérieur de portière et le module pour portière et en une cellule sèche située entre le module pour portière et un garnissage intérieur de portière adjacent, et la partie fonctionnelle comprend des moyens de fixation permettant de fixer des éléments d'isolement acoustique au module pour portière à l'intérieur de la cellule sèche et/ou de la cellule humide.

9. Module pour portière selon la revendication 1, dans lequel le corps de la portière du véhicule se divise en une cellule humide située entre un panneau extérieur de portière et le module pour portière et en une cellule sèche située entre le module pour portière et un garnissage intérieur de portière adjacent, et la partie fonctionnelle comprend une lèvre assurant le contact avec une vitre de portière lorsque celle-ci est rentrée dans la cellule humide de la portière du véhicule, réduisant ainsi les mouvements de la vitre perpendiculairement au plan de la vitre.

10. Module pour portière selon la revendication 1, dans lequel les fibres de verre longues de la matière plastique renforcée de fibres de verre longues sont des fibres de verre discontinues.

11. Module pour portière selon la revendication 1, dans lequel la part de fibres de verre de la matière plastique renforcée de fibres de verre longues se situe entre 30 et 70%.

12. Module pour portière selon la revendication 11, dans lequel la part de fibres de verre de la matière plastique renforcée de fibres de verre longues est d'environ 40%.

13. Module pour portière selon la revendication 1, dans lequel les fibres de verre de la matière plastique renforcée de fibres de verre longues présentent une longueur d'environ 20 mm et une épaisseur d'environ 0,02 mm.

14. Module pour portière selon la revendication 1, dans lequel la matière plastique est le polypropylène.

15. Procédé de fabrication d'un module pour une portière de véhicule, **caractérisé en ce qu'**il comprend :
la fourniture d'un moule permettant de former une partie structurelle du module pour portière, le moule comprenant une ou plusieurs cavité(s) ;
le remplissage du moule avec une matière plastique renforcée de fibres de verre longues ;
l'application de pression sur la matière plastique renforcée de fibres de verre reçue dans le moule, dans lequel ladite ou lesdites cavité(s) du moule présentent des dimensions telles que la matière plastique principalement exempte de fibres de verre longues est enfoncée dans au moins une partie d'une ou plusieurs cavité(s) ; et
le durcissement des parties structurelle et fonctionnelle.

16. Procédé selon la revendication 15, comprenant en outre :
le réchauffement de la matière plastique renforcée de fibres de verre longues reçue dans le moule avant l'application de pression.

17. Procédé selon la revendication 15, comprenant en outre :
la finition de la structure fonctionnelle de manière à obtenir une ou plusieurs découpe(s) pour les faisceaux de câbles.

18. Procédé selon la revendication 15, dans lequel la cavité présente la forme inverse d'une lèvre s'étendant le long du bord extérieur du module pour portière, le procédé comprenant en outre :
le pliage de la lèvre par rapport à la surface de la partie structurelle si bien qu'une coupe transversale de la lèvre est de biais par rapport à la surface de la partie structurelle.

19. Procédé selon la revendication 15, comprenant en outre :
la finition de la structure fonctionnelle de manière à obtenir une lèvre dont la coupe transversale est de biais par rapport à la surface de la partie structurelle.
